# DEMANDE DE BREVET EUROPEEN

(11) **EP 1 434 168 A1**
(43) Date de publication de la demande: **30.06.2004**
(21) Numéro de dépôt: 03104520.6
(22) Date de dépôt: 03.12.2003
(51) Int. Cl.: G06K 19/077, G07F 7/10

(54) **Procédé de fabrication de cartes personnalisées**

(71) Demandeur: Nagracard S.A., 1033 Cheseaux-sur-Lausanne (CH)
(72) Inventeur: GAUMAIN, Serge, 1400, Yverdon (CH); LAUNAZ, Johan, 1400, Yverdon (CH)
(74) Mandataire: Wenger, Joel-Théophile

(57) **Abrégé**

Le but de la présente invention est d'éviter au maximum les erreurs lors de chaque phase de la fabrication d'une carte afin de réduire le taux de rejet et en même temps minimiser les coûts de fabrication tout en améliorant la qualité de la production en grande série.

Ce but est atteint par un procédé de fabrication de cartes personnalisées comprenant une phase d'assemblage (1, 2) incluant la mise en place d'un support de données P1, une phase de personnalisation (3, 4) consistant en l'écriture de données numériques personnalisées D1 sur ledit support de données, lesdites données étant propres à un opérateur OP1 auquel est destinée la carte, caractérisé en ce qu'il comporte les étapes de test suivantes:
- lors de la phase d'assemblage (1), détecter avec des moyens électroniques le type et la nature du support de données P1, identifier visuellement la carte et comparer avec les données propres à l'opérateur OP1, vérifier le résultat de la détection électronique du support de données P1 avec les données associées à l'opérateur OP1,
- appliquer une marque MA reconnaissable représentant un identificateur de l'opérateur,
- lors de la phase de personnalisation (3, 4), lire la marque MA précédemment appliquée et déterminer l'opérateur OP1 par le biais d'une base de données BD,
- comparer les données lues avec les données numériques personnalisées D1 destinées à l'écriture sur le support de données P1 de la carte,
- enregistrement des données de personnalisation D1 dans le support de données P1.

## Description

La présente invention se situe dans le domaine de la fabrication de cartes personnalisées munies de dispositifs servant de support de données numériques tel qu'une bande magnétique et/ou une puce accessible avec ou sans contact. Plus particulièrement, elle concerne des étapes de la fabrication durant lesquelles une carte est personnalisée. Les cartes mentionnées ici sont en général d'un format défini par les normes ISO 7816.

De nombreux appareils nécessitent actuellement l'utilisation d'une carte pour fonctionner, ne serait-ce que pour des raisons de sécurité. Par exemple, une carte peut jouer le rôle d'un module de sécurité dans un décodeur de télévision à péage, dans un téléphone portable ou dans tout autre terminal où transitent des données sensibles. Une carte peut également servir de moyen de paiement, d'identification d'une personne ou de support servant à stocker des données personnelles.

La personnalisation d'une carte consiste en un procédé d'adaptation d'une carte à une application particulière d'un client ou d'un opérateur de télévision à péage. Ce procédé comprend l'introduction de données d'identification sur la bande magnétique et/ou la puce de la carte par exemple sous forme d'un code d'identification ou d'un logiciel permettant de démarrer une application dans un appareil donné.

Une carte d'un type donné ou conçue pour une application donnée se distingue d'une autre carte tout d'abord visuellement par un décor ou un marquage spécifique réalisé en général sur chacune de ses faces. Du point de vue fonctionnel, la distinction se fait au niveau de la nature et du type de support de données (bande à pistes magnétiques ou puce) et au niveau des données stockées dans ce support. Ces données sont accessibles par un lecteur de cartes muni des interfaces adéquates telles qu'une tête de lecture magnétique, des contacts ou une antenne. Ainsi, c'est grâce à la personnalisation qu'une carte bancaire peut être identifiée aisément par rapport à une carte pour décodeur de télévision à péage par exemple.

La fabrication d'une carte s'effectue en trois phases principales:
a) Assemblage de la carte incluant la mise en place d'un support de données sous forme d'une puce et/ou d'une bande magnétique.
   Une carte est assemblée soit à partir d'un empilement laminé de différentes couches constituées de feuilles en matière synthétique, soit par injection de matière plastique dans un moule. Cette phase peut également comprendre l'impression d'un fond coloré et/ou un décor sur l'une et/ou l'autre des faces de la carte.
b) Personnalisation consistant en l'écriture de données numériques personnalisées sur le support (bande magnétique et/ou mémoire de la puce)
c) Individualisation par un marquage unique à chaque carte réalisé par une écriture d'un code dans le support de données et par une impression visible de l'extérieur tel qu'un symbole, un numéro de série, un code barre etc.

Comme les cartes sont fabriquées en très grandes séries avec un rendement élevé, diverses erreurs peuvent survenir lors des différentes phases de la fabrication:
- Mise en place d'un support de données incorrect par son type ou par sa version rendant la personnalisation impossible. Par exemple, une puce incorporée dans l'assemblage peut se révéler incompatible lors d'une tentative d'écriture de données.
- Des données erronées, ne correspondant pas à l'application de l'opérateur auquel est destiné la carte, peuvent être introduites dans le support.
- Un marquage inadéquat sans rapport avec le type et/ou le contenu du support de données peut être effectué sur les faces de la carte.

Ces erreurs sont en général irréversibles c'est-à-dire qu'il n'est pas possible de les corriger par une répétition ou par une inversion de l'une ou l'autre des étapes lors des phases de la fabrication. En effet, concernant la première phase, une puce ne peut plus être changée lorsqu'elle est noyée dans la matière plastique durcie après le pressage des feuilles constituant la carte.

Les données numériques inscrites sur le support, lors de la seconde phase, que ce soit la puce ou la bande magnétique, ne peuvent plus être effacées ou réinscrites pour des raisons de sécurité. En effet, l'écriture de certaines de ces données s'effectue dans un mode dit "write once" dans une zone mémoire particulière du support.

Le marquage individualisé, réalisé lors de la troisième phase et visible sur les faces de la carte par exemple, ne peut pas non plus être modifié sans dommage car il est effectué avec une encre indélébile ou par apport de matière pour créer des reliefs ou encore par gravure de la surface. De plus, le code unique enregistré dans le support de données ne peut pas non plus être corrigé car il est aussi écrit dans le mode "write once" comme les données de personnalisation de la deuxième phase.

Ces cartes défectueuses doivent donc être rebutées et remplacées par des nouvelles. Si elles ne sont pas détectées à temps lors de la production, elles peuvent aboutir chez l'opérateur qui, lors de tests, s'aperçoit qu'elles ne sont pas conformes.

Le but de la présente invention est d'éviter au maximum les erreurs lors de chaque phase de la fabrication d'une carte afin de réduire le taux de rejet et en même temps minimiser les coûts de fabrication tout en améliorant la qualité de la production en grande série.

Ce but est atteint par un procédé de fabrication de cartes personnalisées comprenant une phase d'assemblage incluant la mise en place d'un support de données, une phase de personnalisation consistant en l'écriture de données numériques personnalisées sur ledit support de données, lesdites données étant propres à un opérateur OP1 auquel est destinée la carte, caractérisé en ce qu'il comporte les étapes de test suivantes:
- lors de la phase d'assemblage, détecter avec des moyens électroniques le type et la nature du support de données, identifier visuellement la carte et comparer avec les données propres à l'opérateur, vérifier le résultat de la détection électronique du support de données avec les données associées à l'opérateur,
- appliquer une marque reconnaissable représentant un identificateur de l'opérateur de la carte,
- lors de la phase de personnalisation, lire la marque précédemment appliquée et déterminer l'opérateur,
- comparer les données lues avec les données numériques personnalisées destinées à l'écriture sur le support de données de la carte,
- enregistrement des données de personnalisation dans le support de données.

Une phase suivante consiste à individualiser chaque carte c'est à dire qu'elle comporte les étapes suivantes:
- lire la marque appliquée lors de la phase d'assemblage et déterminer l'opérateur
- sélectionner la base de données spécifique à l'opérateur,
- effectuer le marquage visuel d'un identificateur unique sur au moins une des faces de la carte,
- écrire ledit identificateur dans le support de données et dans la base de données de l'opérateur.

Ces étapes de test assurent une traçabilité permettant de suivre une carte ou plutôt une série de cartes lors de chaque phase de la fabrication. La première phase d'assemblage peut être effectuée en un lieu différent de celui où se déroulent les phases de personnalisation et d'individualisation pour des raisons liées à la sécurité, notamment à la confidentialité des données propres aux opérateurs et à leurs applications. Dans de nombreux cas, ces deux phases sensibles sont groupées en une seule opération globale où une carte, équipée d'un support de données dans lequel est stockée une marque spécifique, acquiert une identité unique.

La marque est, dans la plupart des cas, électronique c'est-à-dire sous forme d'un numéro de référence écrit numériquement dans une zone mémoire de la puce. Elle permet d'identifier l'opérateur et ses spécificités lors des phases de personnalisation et d'individualisation. Ce type de marque sera utilisé de préférence pour des cartes à puce avec ou sans contact. Pour les cartes comportant une bande magnétique ce numéro peut être enregistré sur une des pistes de cette bande à un emplacement réservé. Cette marque électronique est lue au moyen d'un lecteur de cartes équipé des interfaces nécessaires correspondant au type de support de données tel que des contacts pour une carte à puce à contacts, une antenne pour une carte sans contact, une tête magnétique pour lire le contenu d'une piste magnétique.

Selon une variante, la marque peut consister en un signe distinctif visuel sous la forme d'un symbole, un dessin, une suite de caractères alpha-numériques ou un code barre. Cette marque visuelle peut être lue avec des moyens de lecture optique tel qu'une caméra ou un lecteur à de caractères ou de codes barres.

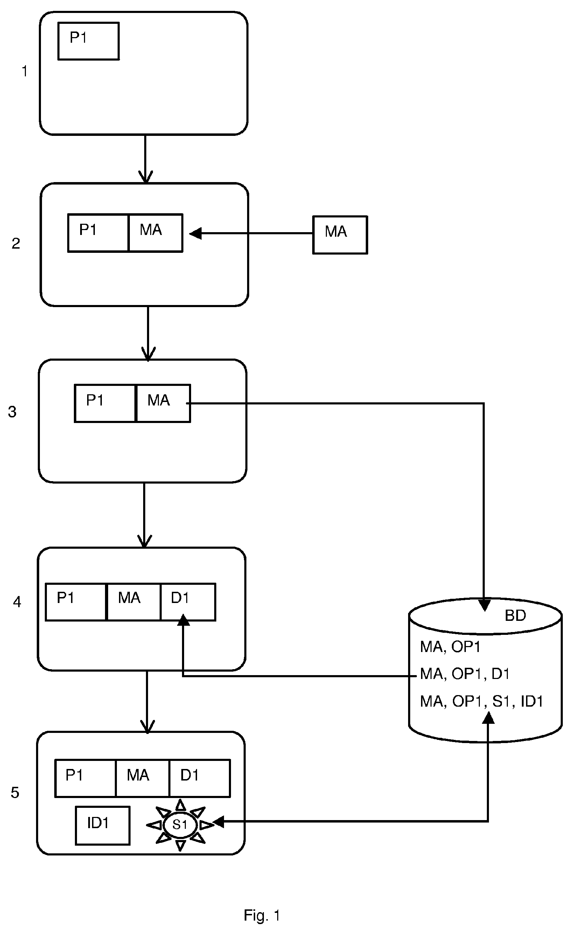

L'invention sera mieux comprise grâce à la description détaillée qui va suivre et qui se réfère à l'unique figure annexée donnée à titre d'exemple nullement limitatif. La figure 1 illustre les différentes étapes de test effectuées lors des phases principales de la fabrication d'une carte à puce.

Les étapes 1 et 2 illustrées par la figure 1 sont effectuées à la fin de la phase d'assemblage de la carte où le substrat de matière synthétique comprenant la puce est durci et se trouve dans une forme et des dimensions correspondant à une carte standard. Le type du support de données P1, à savoir la puce, est déterminé par la réponse à une commande adéquate transmise à la puce via ses contacts sur la face de la carte par exemple. Cette référence de la puce P1 est ensuite vérifiée par rapport aux spécifications demandées par l'opérateur OP1 et par rapport à la nature de la carte déterminée par un contrôle visuel. Par exemple, pour un opérateur OP1 donné, le substrat sera toujours fourni dans une certaine gamme de couleurs avec une puce P1 reliée aux huit contacts d'une rosace affleurant la surface de la carte.

Une marque MA est appliquée (référence 2 dans la figure 1) par inscription d'un code particulier permettant de déterminer l'opérateur OP1 lors des phases de personnalisation (3, 4) et d'individualisation (5) effectuées ultérieurement. Dans cet exemple, la marque MA est enregistrée dans une zone libre de la mémoire de la puce P1.

Lors de la personnalisation montrée par les références 3 et 4 dans la figure 1, la marque MA est lue au moyen d'un appareil approprié qui peut déterminer l'opérateur OP1 avec une table de correspondance dans une base de donnée BD par exemple. A chaque opérateur OP1 sont associées des données D1 qui lui sont propres et qui seront enregistrées de manière sécurisée dans une mémoire de la carte. Cette mémoire est configurée de manière à ne permettre qu'une seule session d'enregistrement de données ou "write once". Comme il ne sera donc plus possible d'effacer ou de modifier des données après leur enregistrement, il est donc important d'assurer le suivi de la carte depuis la première phase de sa fabrication où des paramètres spécifiques à l'opérateur sont introduits dans la carte.

La carte personnalisée au point de vue contenu en données numériques (référence 4 de la figure 1) est ensuite individualisée c'est-à-dire rendue unique par un identificateur (ID1) apposé sur la carte en général sous forme d'un numéro, d'une suite de caractères alpha-numériques pouvant être accompagné d'un code barre (référence 5 de la figure 1). D'autres signes distinctifs visuels comme un logo ou des symboles particuliers S1 peuvent aussi être imprimés sur la carte lors de cette dernière étape. Ce marquage individuel (S1, ID1) est réalisé après détermination de l'opérateur OP1 suite à la lecture de la marque MA dans la base de données BD. Un contrôle des données spécifiques D1 stockées auparavant dans la puce P1 peut également être effectué lors de cette étape.

Cet identificateur ID1 est ensuite transféré dans le support de données (mémoire de la puce ou bande magnétique) ainsi que dans la base de données BD contenant les paramètres des cartes produites pour un opérateur OP1 donné.

Cette base de donnée BD spécifique à l'opérateur contient à la fin du processus de fabrication, entre autres données, la marque MA, un numéro de référence de l'opérateur OP1 auquel est associé un numéro se rapportant aux données D1 enregistrées dans le support de données et le numéro unique d'identification ID1 pouvant être accompagné par une référence à un symbole particulier S1.

Selon, une variante le numéro unique d'identification ID1 peut être égal à la marque MA utilisée lors des étapes de test durant la fabrication de la carte et il peut aussi correspondre au numéro de la puce P1 inscrit dans celle-ci par le fabricant. Dans ce cas, lors de la phase de l'assemblage (1, 2) de la carte, le numéro de la puce P1 est lu puis stocké dans une base de données BD où il est associé à un opérateur OP1. Ainsi lors des phases de personnalisation (3, 4) et d'individualisation (5), il suffit de lire le numéro de la puce P1 et le soumettre à la base de données BD pour déterminer l'opérateur OP1 avant les étapes d'écriture de données et de marquage spécifiques.

Selon une variante du procédé, un numéro de lot L peut être attribué à une série de cartes prédéterminée et introduit dans une base de données lors de la première phase d'assemblage de la carte. Ce numéro de lot permet de définir d'une part une série de cartes et d'autre part des paramètres physiques comme par exemple la nature de la matière plastique constituant la carte, des dimensions particulières, un procédé de fabrication etc. Chaque marque MA préalablement introduite dans le support de données ou, selon la variante décrite plus haut, chaque numéro unique de la puce (ID1) est lu puis associé à ce numéro de lot L dans la base de données.

Ainsi, durant les phases de personnalisation et d'individualisation, le numéro de lot L pourra être contrôlé lors de la lecture de la marque MA sur le support de données de la carte.

A la fin du processus de fabrication, la consultation du contenu de la base de donnée permettra de connaître par exemple la composition de la matière de la carte pour une série destinée à un opérateur donné. Ce paramètre ainsi déterminé permettra, par exemple, de reproduire ultérieurement une nouvelle série de cartes conforme à la première en respectant les critères de qualité nécessaires tout au long des différentes phases de la fabrication.

## Revendications

1. Procédé de fabrication de cartes personnalisées comprenant une phase d'assemblage (1, 2) incluant la mise en place d'un support de données P1, une phase de personnalisation (3, 4) consistant en l'écriture de données numériques personnalisées D1 sur ledit support de données, lesdites données étant propres à un opérateur OP1 auquel est destinée la carte, **caractérisé en ce qu'**il comporte les étapes de test suivantes:
- lors de la phase d'assemblage (1), détecter avec des moyens électroniques le type et la nature du support de données P1, identifier visuellement la carte et comparer avec les données propres à l'opérateur OP1, vérifier le résultat de la détection électronique du support de données P1 avec les données associées à l'opérateur OP1,
- appliquer une marque MA reconnaissable représentant un identificateur de l'opérateur,
- lors de la phase de personnalisation (3, 4), lire la marque MA précédemment appliquée et déterminer l'opérateur OP1 par le biais d'une base de données BD,
- comparer les données lues avec les données numériques personnalisées D1 destinées à l'écriture sur le support de données P1 de la carte,
- enregistrement des données de personnalisation D1 dans le support de données P1.

2. Procédé selon la revendication 1 comprenant une phase d'individualisation (5) après la phase de personnalisation (3, 4) **caractérisé en ce qu'**il comporte les étapes supplémentaires suivantes:
- lire la marque MA appliquée lors de la phase d'assemblage (2) et déterminer l'opérateur OP1,
- sélectionner la base de données BD spécifique à l'opérateur OP1,
- effectuer le marquage visuel S1 d'un identificateur unique ID1 sur au moins une des faces de la carte,
- écrire ledit identificateur ID1 dans le support de données et dans la base de données BD de l'opérateur OP1.

3. Procédé selon la revendication 1 **caractérisé en ce que** le support de données P1 est une bande magnétique disposée sur une des faces de la carte.

4. Procédé selon la revendication 1 **caractérisé en ce que** le support de données P1 est une puce électronique pourvue d'une mémoire servant à stocker des données numériques.

5. Procédé selon la revendication 1 **caractérisé en ce que** la marque MA est constituée de données numériques écrites dans le support de données P1 de la carte et lisible au moyen d'un lecteur de cartes équipé d'interfaces adaptées au type de support de données P1.

6. Procédé selon la revendications 1 **caractérisé en ce que** la marque MA est appliquée sur l'une des faces de la carte sous forme d'un signe distinctif visuel reconnaissable par des moyens de lecture optique.

7. Procédé selon la revendication 1 **caractérisé en ce qu'**un numéro de lot L est attribué à une série de cartes prédéterminée et introduit dans une base de données BD lors de la première phase (1) de l'assemblage de la carte, chaque marque MA introduite dans le support est lue puis associée à ce numéro de lot L dans ladite base de données BD.

8. Procédé selon la revendication 7 **caractérisé en ce que** le numéro de lot L définit une série de cartes selon des paramètres physiques établis lors de la phase d'assemblage de la carte.

9. Procédé selon les revendications 1 à 8 **caractérisé en ce que** lors de la phase d'assemblage de la carte, l'étape d'application de la marque MA est remplacée par la lecture d'un identificateur unique du support de données introduit par le fabricant dudit support, ledit identificateur étant introduit dans une base de donnée et attribué à un opérateur donné.

10. Procédé selon la revendication 9 **caractérisé en ce que** lors des phases de personnalisation et d'individualisation de la carte, l'identificateur unique du support de donnée est lu puis soumis à la base de données permettant la détermination de l'opérateur.
